# EUROPEAN PATENT APPLICATION

(11) **EP 4 703 245 A1**
(43) Date of publication of application: **04.03.2026**
(21) Application number: 25192288.6
(22) Date of filing: 28.07.2025
(51) Int. Cl.: B62D 57/032

(54) **HIGH-FLEXIBILITY SIMULATION ROBOT**

(30) Priority: 03.09.2024 CN 202411229081; 03.09.2024 CN 202422157262 U
(71) Applicant: Booster Robotics Technology Co., Ltd, Beijing (CN)
(72) Inventor: LI, Kang, Beijing (CN)
(74) Representative: Chung, Hoi Kan

(57) **Abstract**

Disclosed is a high-flexibility simulation robot, where a left arm mechanism has four degrees of freedom of motion: the left arm mechanism performs rotation motion relative to a trunk mechanism, the left arm mechanism performs pitching motion relative to the trunk mechanism, an upper arm of the left arm mechanism rotates, and an elbow of the left arm mechanism swings forwards; a right arm mechanism has four degrees of freedom of motion: the right arm mechanism performs rotation motion relative to the trunk mechanism, the right arm mechanism performs pitching motion relative to the trunk mechanism, an upper arm of the right arm mechanism rotates, and an elbow of the right arm mechanism swings forwards; a hip mechanism has one degree of freedom of motion: the hip mechanism performs rotation motion relative to the trunk mechanism.

## Description

### TECHNICAL FIELD

This disclosure belongs to technical field of robots, and in particular, to a high-flexibility simulation robot.

### BACKGROUND

With the deepening of people's understanding of the intelligent essence of robot technology, robot technology has begun to continuously penetrate into various fields of human activities. Combined with the application characteristics of these fields, people have developed a variety of special robots and various intelligent robots with perception, decision-making, action and interaction capabilities.

A robot is a machine device that performs work automatically, which can receive human commands, run pre-programmed programs, or act in accordance with principles and guidelines formulated by artificial intelligence technology. The robot is a product of advanced integration cybernetics, mechanical electronics, computers, materials and bionics, and has important uses in various fields such as industry, medicine, agriculture, service industry, construction industry, and even military.

For simulation robots, a reliable mechanical structure design is a prerequisite for ensuring the realization of robot software control or programmed actions. Especially for humanoid bipedal robots, the weight distribution of each component is an important factor affecting the performance of the robot. The overall layout compactness, joint integration degree, and universality of the structure are also critical. How to design a simulation robot with a compact layout, a high joint integration degree, and high flexibility has important application value.

### SUMMARY

Therefore, this disclosure provides a high-flexibility simulation robot, which has a more compact structure layout, a high degree of joint integration, and better flexibility.

To achieve the above objective, this disclosure provides a technical solution as follows: a high-flexibility simulation robot, including a head mechanism, a trunk mechanism, a left arm mechanism, a right arm mechanism, a hip mechanism, a left leg mechanism, and a right leg mechanism;
the head mechanism is connected to an upper end of the trunk mechanism, and the head mechanism has two degrees of freedom of motion: the head mechanism performs rotation and pitching motion relative to the trunk mechanism;
the left arm mechanism is connected to a left side of the trunk mechanism, and the left arm mechanism has four degrees of freedom of motion: the left arm mechanism performs rotation motion relative to the trunk mechanism, the left arm mechanism performs pitching motion relative to the trunk mechanism, an upper arm of the left arm mechanism rotates, and an elbow of the left arm mechanism swings forwards;
the right arm mechanism is connected to a right side of the trunk mechanism, and the right arm mechanism has four degrees of freedom of motion: the right arm mechanism performs rotation motion relative to the trunk mechanism, the right arm mechanism performs pitching motion relative to the trunk mechanism, an upper arm of the right arm mechanism rotates, and an elbow of the right arm mechanism swings forwards;
the hip mechanism is connected to a lower end of the trunk mechanism, and the hip mechanism has one degree of freedom of motion: the hip mechanism performs rotation motion relative to the trunk mechanism;
the left leg mechanism is connected to a left side of the hip mechanism, and the left leg mechanism has six degrees of freedom of motion: forward swing, side swing, rotation, knee forward swing, ankle forward swing, and ankle side swing motion of the left leg mechanism; and
the right leg mechanism is connected to a right side of the hip mechanism, and the right leg mechanism has six degrees of freedom of motion: forward swing, side swing, rotation, knee forward swing, ankle forward swing, and ankle side swing motion of the right leg mechanism.

As a preferred solution of the high-flexibility simulation robot, the trunk mechanism includes a trunk frame, and a main controller and a battery pack are arranged in the trunk frame; and drive motors of the head mechanism, the trunk mechanism, the left arm mechanism, the right arm mechanism, the hip mechanism, the left leg mechanism, and the right leg mechanism are all electrically connected to the main controller, and the battery pack is electrically connected to the main controller.

As a preferred solution of the high-flexibility simulation robot, the head mechanism includes a binocular camera, and a head pitching drive motor is connected to a lower end of the binocular camera; and a head rotation drive motor is connected to a lower end of the head pitching drive motor, and the head rotation drive motor is arranged inside the trunk frame of the trunk mechanism.

As a preferred solution of the high-flexibility simulation robot, the left arm mechanism includes a left arm rotation drive motor, a left arm pitching drive motor, a left upper arm, a left elbow rotation drive motor, a left elbow swing drive motor, and a left forearm;
the left arm rotation drive motor is located inside the trunk frame, and a power output end of the left arm rotation drive motor is connected to the left arm pitching drive motor; a power output end of the left arm pitching drive motor is connected to one end of the left upper arm; the left elbow rotation drive motor is located inside the left upper arm, and a power output end of the left elbow rotation drive motor is connected to the left elbow swing drive motor; and a power output end of the left elbow swing drive motor is connected to the other end of the left upper arm, and the left forearm is connected to a side portion of the left elbow swing drive motor.

As a preferred solution of the high-flexibility simulation robot, the right arm mechanism includes a right arm rotation drive motor, a right arm pitching drive motor, a right upper arm, a right elbow rotation drive motor, a right elbow swing drive motor, and a right forearm;

the right arm rotation drive motor is located inside the trunk frame, and a power output end of the right arm rotation drive motor is connected to the right arm pitching drive motor; a power output end of the right arm pitching drive motor is connected to one end of the right upper arm; the right elbow rotation drive motor is located inside the right upper arm, and a power output end of the right elbow rotation drive motor is connected to the right elbow swing drive motor; and a power output end of the right elbow swing drive motor is connected to the other end of the right upper arm, and the right forearm is connected to a side portion of the right elbow swing drive motor.

As a preferred solution of the high-flexibility simulation robot, the hip mechanism includes a waist rotation drive motor, a hip structural member, a hip flange, a left leg swing drive motor, and a right leg swing drive motor;
an upper portion of the waist rotation drive motor is fixedly connected to a lower end of the trunk frame, and a power output end of the waist rotation drive motor is connected to the hip structural member through the hip flange;
the left leg swing drive motor is arranged on a left side of the interior of the hip structural member, and the hip mechanism is connected to the left leg mechanism through the left leg swing drive motor; and
the right leg swing drive motor is arranged on a right side of the interior of the hip structural member, and the hip mechanism is connected to the right leg mechanism through the right leg swing drive motor.

As a preferred solution of the high-flexibility simulation robot, the left leg mechanism and the right leg mechanism each include a cross-leg drive assembly, a thigh assembly, a knee joint drive motor, a shank assembly, an ankle assembly, and a foot plate assembly;
the hip mechanism is connected to the cross-leg drive assembly through a leg swing drive motor; an upper end of the thigh assembly is connected to a power output end of the cross-leg drive assembly; and a lower end of the thigh assembly is connected to the knee joint drive motor, a power output end of the knee joint drive motor is connected to an upper end of the shank assembly,
a lower end of the shank assembly is connected to the ankle assembly, and the ankle assembly is connected to the foot plate assembly.

As a preferred solution of the high-flexibility simulation robot, the cross-leg drive assembly includes a cross-leg drive motor, and the thigh assembly includes a cross-swing output structural member, a cross-swing passive end structural member, a leg rotation drive motor, and a leg extension member; a power output end of the cross-leg drive motor is connected to the cross-swing output structural member, and the other end of the cross-leg drive motor is connected to the cross-swing passive end structural member;
a leg rotation power output structural member is arranged between the cross-swing output structural member and the cross-swing passive end structural member, and a power output end of the leg rotation drive motor is connected to the leg rotation power output structural member; and
a lower end of the leg rotation drive motor is connected to the leg extension member.

As a preferred solution of the high-flexibility simulation robot, the shank assembly includes a knee joint power output structural member, a knee joint passive end structural member, a shank structural member, a first ankle joint drive motor, a second ankle joint drive motor, a first rocker arm swing member, and a second rocker arm swing member; the ankle assembly includes an ankle cross shaft member and an ankle connecting rod;
the power output end of the knee joint drive motor is connected to the knee joint power output structural member, and the other end of the knee joint drive motor is connected to the knee joint passive end structural member; an upper portion of the shank structural member is connected between a lower portion of the knee joint power output structural member and a lower portion of the knee joint passive end structural member, a lower portion of the shank structural member is connected to the ankle cross shaft member, and the ankle cross shaft member is fixed above the foot plate assembly;
a first motor mounting position and a second motor mounting position are formed on the shank structural member; the first ankle joint drive motor is fixed to the first motor mounting position, a power output end of the first ankle joint drive motor is connected to an upper portion of the first rocker arm swing member, and a lower portion of the first rocker arm swing member is connected to one side of the ankle connecting rod; and the second ankle joint drive motor is fixed to the second motor mounting position, a power output end of the second ankle joint drive motor is connected to an upper portion of the second rocker arm swing member, and a lower portion of the second rocker arm swing member is connected to the other side of the ankle connecting rod.

As a preferred solution of the high-flexibility simulation robot, a lower end of the ankle connecting rod is provided with a foot plate adapter, the ankle cross shaft member is connected to the foot plate adapter, and the foot plate adapter is fixed above the foot plate assembly.

The beneficial effects of this disclosure are as follows: the head mechanism, the trunk mechanism, the left arm mechanism, the right arm mechanism, the hip mechanism, the left leg mechanism, and the right leg mechanism are arranged; the head mechanism is connected to the upper end of the trunk mechanism, and the head mechanism has two degrees of freedom of motion: the head mechanism performs rotation and pitching motion relative to the trunk mechanism; the left arm mechanism is connected to the left side of the trunk mechanism, and the left arm mechanism has four degrees of freedom of motion: the left arm mechanism performs rotation motion relative to the trunk mechanism, the left arm mechanism performs pitching motion relative to the trunk mechanism, the upper arm of the left arm mechanism rotates, and the elbow of the left arm mechanism swings forwards; the right arm mechanism is connected to the right side of the trunk mechanism, and the right arm mechanism has four degrees of freedom of motion: the right arm mechanism performs rotation motion relative to the trunk mechanism, the right arm mechanism performs pitching motion relative to the trunk mechanism, the upper arm of the right arm mechanism rotates, and the elbow of the right arm mechanism swings forwards; the hip mechanism is connected to the lower end of the trunk mechanism, and the hip mechanism has one degree of freedom of motion: the hip mechanism performs rotation motion relative to the trunk mechanism; the left leg mechanism is connected to the left side of the hip mechanism, and the left leg mechanism has six degrees of freedom of motion: forward swing, side swing, rotation, knee forward swing, ankle forward swing, and ankle side swing motion of the left leg mechanism; and the right leg mechanism is connected to the right side of the hip mechanism, and the right leg mechanism has six degrees of freedom of motion: forward swing, side swing, rotation, knee forward swing, ankle forward swing, and ankle side swing motion of the right leg mechanism. According to this disclosure, the structure is high in overall layout compactness and high in joint integration degree, so that a large movement range of a robot can be achieved, and flexibility and universality are improved.

### BRIEF DESCRIPTION OF THE DRAWINGS

To describe the technical solutions in the implementations or the prior art of this disclosure more clearly, a brief introduction will be given below to the drawings required in the description of the implementations or the prior art. Apparently, the drawings in the following description are merely exemplary, and those of ordinary skill in the art may further derive other implementation drawings according to the provided drawings without creative labor.

The structures, proportions, sizes and the like shown in the specification are only intended for matching the content disclosed herein and facilitating the understanding and reading of those skilled in the art rather than for limiting the implementation conditions of this disclosure. Therefore, they have no technically substantial significance, and any structural modifications, changes in proportions, or adjustments in size, without affecting the effects and objectives that this disclosure can produce and achieve, shall still fall within the scope of technical content disclosed in this disclosure.
FIG. 1 is a three-dimensional schematic diagram of a high-flexibility simulation robot according to an embodiment of this disclosure;
FIG. 2 is a schematic diagram showing a design of a trunk mechanism of a high-flexibility simulation robot according to an embodiment of this disclosure;
FIG. 3 is a schematic diagram of a left arm mechanism of a high-flexibility simulation robot according to an embodiment of this disclosure;
FIG. 4 is a schematic diagram of a right arm mechanism of a high-flexibility simulation robot according to an embodiment of this disclosure;
FIG. 5 is a schematic diagram of a hip mechanism of a high-flexibility simulation robot according to an embodiment of this disclosure;
FIG. 6 is a schematic diagram of a left leg mechanism/right leg mechanism of a high-flexibility simulation robot according to an embodiment of this disclosure;
FIG. 7 is a schematic diagram of a thigh assembly of a high-flexibility simulation robot according to an embodiment of this disclosure;
FIG. 8 is a decomposition schematic diagram of a thigh assembly of a high-flexibility simulation robot according to an embodiment of this disclosure;
FIG. 9 is a schematic diagram of a shank assembly of a high-flexibility simulation robot according to an embodiment of this disclosure; and
FIG. 10 is a decomposition schematic diagram of a shank assembly of a high-flexibility simulation robot according to an embodiment of this disclosure.

In the figures: 1. head mechanism; 2. trunk mechanism; 3. left arm mechanism; 4. right arm mechanism; 5. hip mechanism; 6. left leg mechanism; 7. right leg mechanism; 8. trunk frame; 9. main controller; 10. battery pack; 11. binocular camera; 12. head pitching drive motor; 13. head rotation drive motor; 14. left arm rotation drive motor; 15. left arm pitching drive motor; 16. left upper arm; 17. left elbow rotation drive motor; 18. left elbow swing drive motor; 19. left forearm; 20. right arm rotation drive motor; 21. right arm pitching drive motor; 22. right upper arm; 23. right elbow rotation drive motor; 24. right elbow swing drive motor; 25. right forearm; 26. waist rotation drive motor; 27. hip structural member; 28. hip flange; 29. left leg swing drive motor; 30. right leg swing drive motor; 31. cross-leg drive assembly; 32. thigh assembly; 33. knee joint drive motor; 34. shank assembly; 35. ankle assembly; 36. foot plate assembly; 37. cross-leg drive motor; 38. cross-swing output structural member; 39. cross-swing passive end structural member; 40. leg rotation drive motor; 41. leg extension member; 42. leg rotation power output structural member; 43. knee joint power output structural member; 44. knee joint passive end structural member; 45. shank structural member; 46. first ankle joint drive motor; 47. second ankle joint drive motor; 48. first rocker arm swing member; 49. second rocker arm swing member; 50. ankle cross shaft member; 51. ankle connecting rod; 52. first motor mounting position; 53. second motor mounting position; 54. foot plate adapter.

### DETAILED DESCRIPTION OF THE EMBODIMENTS

The following illustrates the implementations of this disclosure through specific embodiments, and those skilled in the art can easily understand other advantages and beneficial effects of this disclosure from the content disclosed in the specification. Apparently, the described embodiments are some but not all of the embodiments of this disclosure. Based on the embodiments in this disclosure, all other embodiments obtained by those of ordinary skill in the art without making creative labor fall within the scope of protection of this disclosure.

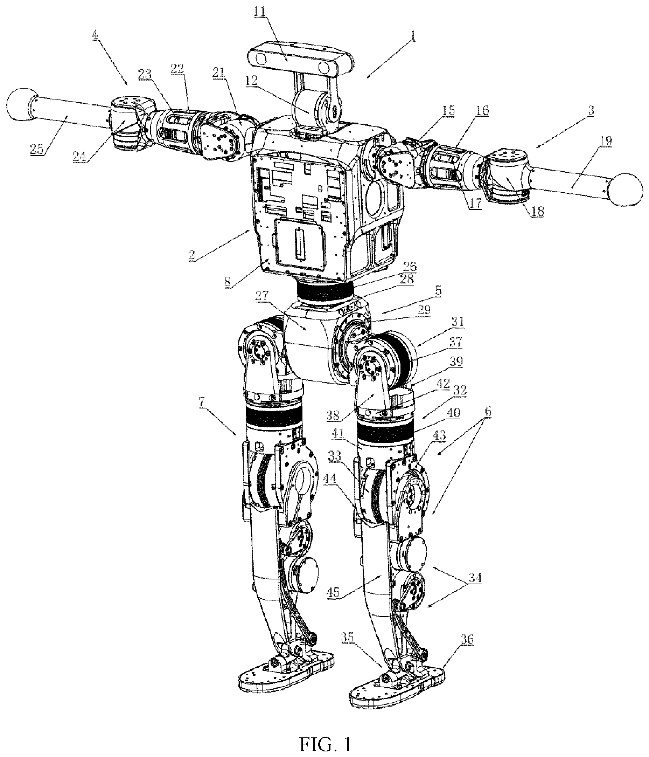

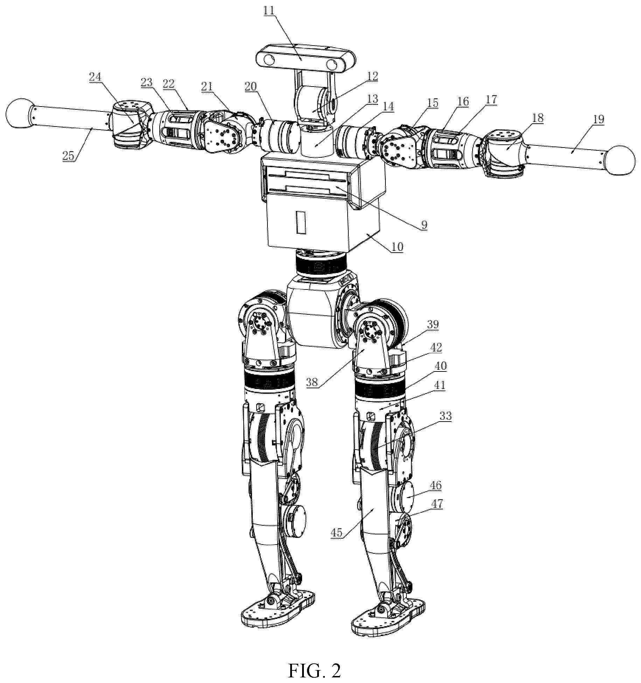

Referring to FIG. 1 and FIG. 2, an embodiment of this disclosure provides a high-flexibility simulation robot, including a head mechanism 1, a trunk mechanism 2, a left arm mechanism 3, a right arm mechanism 4, a hip mechanism 5, a left leg mechanism 6, and a right leg mechanism 7;
the head mechanism 1 is connected to an upper end of the trunk mechanism 2, and the head mechanism 1 has two degrees of freedom of motion: the head mechanism 1 performs rotation and pitching motion relative to the trunk mechanism 2;
the left arm mechanism 3 is connected to a left side of the trunk mechanism 2, and the left arm mechanism 3 has four degrees of freedom of motion: the left arm mechanism 3 performs rotation motion relative to the trunk mechanism 2, the left arm mechanism 3 performs pitching motion relative to the trunk mechanism 2, an upper arm of the left arm mechanism 3 rotates, and an elbow of the left arm mechanism 3 swings forwards;
the right arm mechanism 4 is connected to a right side of the trunk mechanism 2, and the right arm mechanism 4 has four degrees of freedom of motion: the right arm mechanism 4 performs rotation motion relative to the trunk mechanism 2, the right arm mechanism 4 performs pitching motion relative to the trunk mechanism 2, an upper arm of the right arm mechanism 4 rotates, and an elbow of the right arm mechanism 4 swings forwards;
the hip mechanism 5 is connected to a lower end of the trunk mechanism 2, and the hip mechanism 5 has one degree of freedom of motion: the hip mechanism 5 performs rotation motion relative to the trunk mechanism 2;
the left leg mechanism 6 is connected to a left side of the hip mechanism 5, and the left leg mechanism 6 has six degrees of freedom of motion: forward swing, side swing, rotation, knee forward swing, ankle forward swing, and ankle side swing motion of the left leg mechanism 6; and
the right leg mechanism 7 is connected to a right side of the hip mechanism 5, and the right leg mechanism 7 has six degrees of freedom of motion: forward swing, side swing, rotation, knee forward swing, ankle forward swing, and ankle side swing motion of the right leg mechanism 7.

Referring to FIG. 2, in this embodiment, the trunk mechanism 2 includes a trunk frame 8, and a main controller 9 and a battery pack 10 are arranged inside the trunk frame 8; and drive motors of the head mechanism 1, the trunk mechanism 2, the left arm mechanism 3, the right arm mechanism 4, the hip mechanism 5, the left leg mechanism 6, and the right leg mechanism 7 are electrically connected to the main controller 9, and the battery pack 10 is electrically connected to the main controller 9.

Specifically, the main controller 9 and drive motors of the head mechanism 1, the trunk mechanism 2, the left arm mechanism 3, the right arm mechanism 4, the hip mechanism 5, the left leg mechanism 6, and the right leg mechanism 7 are powered through the battery pack 10, and actions of the head mechanism 1, the trunk mechanism 2, the left arm mechanism 3, the right arm mechanism 4, the hip mechanism 5, the left leg mechanism 6, and the right leg mechanism 7 are controlled through the main controller 9, so that the head mechanism 1 performs rotation and pitching motion relative to the trunk mechanism 2, the left arm mechanism 3 performs rotation motion relative to the trunk mechanism 2, the left arm mechanism 3 performs pitching motion relative to the trunk mechanism 2, and the upper arm of the left arm mechanism 3 rotates, and the elbow of the left arm mechanism 3 swings forwards; the right arm mechanism 4 performs rotation motion relative to the trunk mechanism 2, the right arm mechanism 4 performs pitching motion relative to the trunk mechanism 2, and the upper arm of the right arm mechanism 4 rotates, and the elbow of the right arm mechanism 4 swings forwards; the hip mechanism 5 performs rotation motion relative to the trunk mechanism 2; rotation of the hip mechanism 5 relative to the left leg mechanism 6 is achieved; rotation of the hip mechanism 5 relative to the right leg mechanism 7 is achieved; forward swing, side swing, rotation, knee forward swing, ankle forward swing, and ankle side swing motion of the left leg mechanism 6 are achieved; and forward swing, side swing, rotation, knee forward swing, ankle forward swing, and ankle side swing motion of the right leg mechanism 7 are achieved.

Referring to FIG. 1 and FIG. 2 again, in this embodiment, the head mechanism 1 includes a binocular camera 11, and a head pitching drive motor 12 is connected to a lower end of the binocular camera 11; and a head rotation drive motor 13 is connected to a lower end of the head pitching drive motor 12, and the head rotation drive motor 13 is arranged inside the trunk frame 8 of the trunk mechanism 2.

Specifically, the binocular camera 11 is mounted at a top end of the head mechanism 1. Rotation and pitching motion of the head binocular camera 11 can be achieved through the head rotation drive motor 13 and the head pitching drive motor 12. The head rotation drive motor 13 for controlling the rotation of the binocular camera 11 is fixed inside the trunk frame 8 of the trunk mechanism 2, an output flange of the head rotation drive motor 13 is connected to a fixed end of the head pitching drive motor 12 for controlling the pitching of the binocular camera 11, and an output flange of the head pitching drive motor 12 for controlling the pitching of the binocular camera 11 is connected to a camera mounting assembly, thereby realizing the movement of the binocular camera 11. The machine vision algorithm integrated by the main controller 9 and the binocular camera 11 belongs to the prior art, and details are not described herein again.

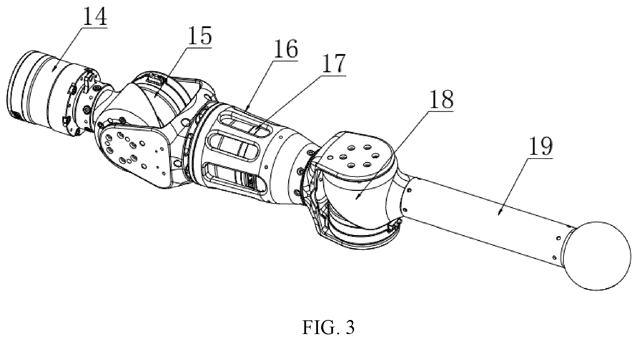

Referring to FIG. 3, in this embodiment, the left arm mechanism 3 includes a left arm rotation drive motor 14, a left arm pitching drive motor 15, a left upper arm 16, a left elbow rotation drive motor 17, a left elbow swing drive motor 18, and a left forearm 19;
the left arm rotation drive motor 14 is located inside the trunk frame 8, and a power output end of the left arm rotation drive motor 14 is connected to the left arm pitching drive motor 15; a power output end of the left arm pitching drive motor 15 is connected to one end of the left upper arm 16; the left elbow rotation drive motor 17 is located inside the left upper arm 16, and a power output end of the left elbow rotation drive motor 17 is connected to the left elbow swing drive motor 18; and a power output end of the left elbow swing drive motor 18 is connected to the other end of the left upper arm 16, and the left forearm 19 is connected to a side portion of the left elbow swing drive motor 18.

Specifically, the left arm rotation drive motor 14 in the trunk frame 8 can drive the left arm pitching drive motor 15, the left upper arm 16, the left elbow rotation drive motor 17, the left elbow swing drive motor 18, and the left forearm 19 to rotate. The left arm pitching drive motor 15 can drive the left upper arm 16, the left elbow rotation drive motor 17, the left elbow swing drive motor 18, and the left forearm 19 to pitch. The left elbow rotation drive motor 17 can drive the left elbow swing drive motor 18 and the left forearm 19 to rotate, and the left elbow swing drive motor 18 can drive the left forearm 19 to swing.

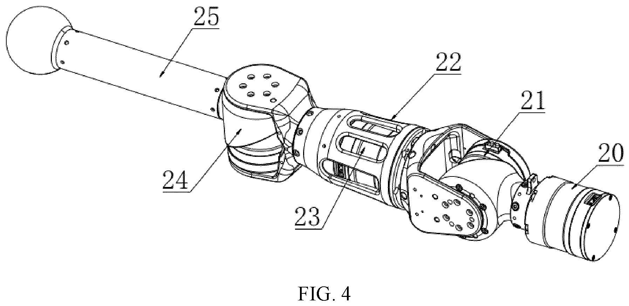

Referring to FIG. 4, in this embodiment, the right arm mechanism 4 includes a right arm rotation drive motor 20, a right arm pitching drive motor 21, a right upper arm 22, a right elbow rotation drive motor 23, a right elbow swing drive motor 24, and a right forearm 25;
the right arm rotation drive motor 20 is located inside the trunk frame 8, and a power output end of the right arm rotation drive motor 20 is connected to the right arm pitching drive motor 21; a power output end of the right arm pitching drive motor 21 is connected to one end of the right upper arm 22; the right elbow rotation drive motor 23 is located inside the right upper arm 22, and a power output end of the right elbow rotation drive motor 23 is connected to the right elbow swing drive motor 24; and a power output end of the right elbow swing drive motor 24 is connected to the other end of the right upper arm 22, and the right forearm 25 is connected to a side portion of the right elbow swing drive motor 24.

Specifically, the right arm rotation drive motor 20 in the trunk frame 8 can drive the right arm pitching drive motor 21, the right upper arm 22, the right elbow rotation drive motor 23, the right elbow swing drive motor 24, and the right forearm 25 to rotate. The right arm pitching drive motor 21 can drive the right upper arm 22, the right elbow rotation drive motor 23, the right elbow swing drive motor 24, and the right forearm 25 to pitch. The right elbow rotation drive motor 23 can drive the right elbow swing drive motor 24 and the right forearm 25 to rotate, and the right elbow swing drive motor 24 can drive the right forearm 25 to swing.

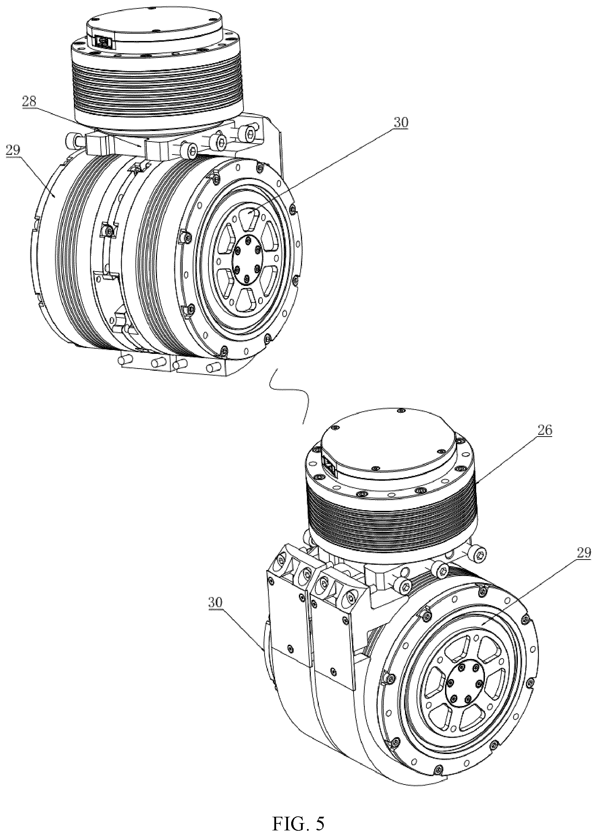

Referring to FIG. 5, in this embodiment, the hip mechanism 5 includes a waist rotation drive motor 26, a hip structural member 27, a hip flange 28, a left leg swing drive motor 29, and a right leg swing drive motor 30;
an upper portion of the waist rotation drive motor 26 is fixedly connected to a lower end of the trunk frame 8, and a power output end of the waist rotation drive motor 26 is connected to the hip structural member 27 through the hip flange 28; the left leg swing drive motor 29 is arranged on a left side of the interior of the hip structural member 27, and the hip mechanism 5 is connected to the left leg mechanism 6 through the left leg swing drive motor 29; and the right leg swing drive motor 30 is arranged on a right side of the interior of the hip structural member 27, and the hip mechanism 5 is connected to the right leg mechanism 7 through the right leg swing drive motor 30.

Specifically, the waist rotation drive motor 26 can drive the hip structural member 27 to rotate through the hip flange 28. The left leg swing drive motor 29 in the hip structural member 27 can drive the entire left leg mechanism 6 to swing, and the right leg swing drive motor 30 in the hip structural member 27 can drive the entire right leg mechanism 7 to swing. For the left leg swing drive motor 29 and the right leg swing drive motor 30, a clamping structural member can be connected to the hip structural member 27, and the clamping structural member fixes the left leg swing drive motor 29 and the right leg swing drive motor 30 in the hip structural member 27 through a bolt.

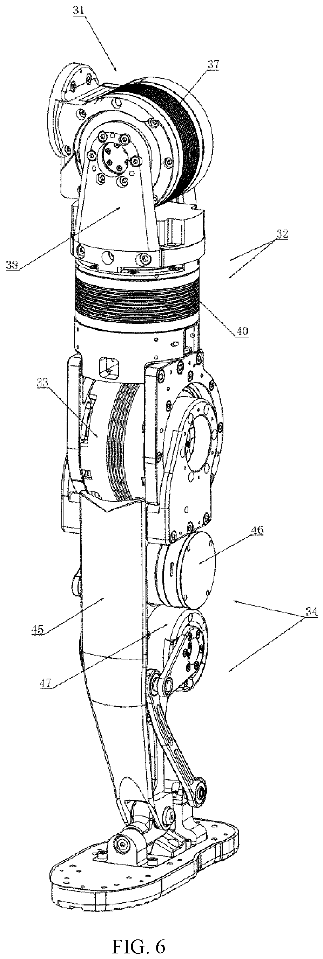

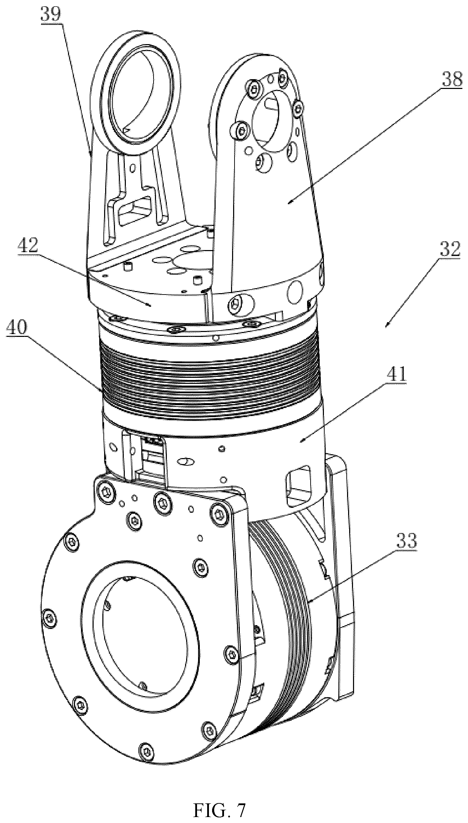

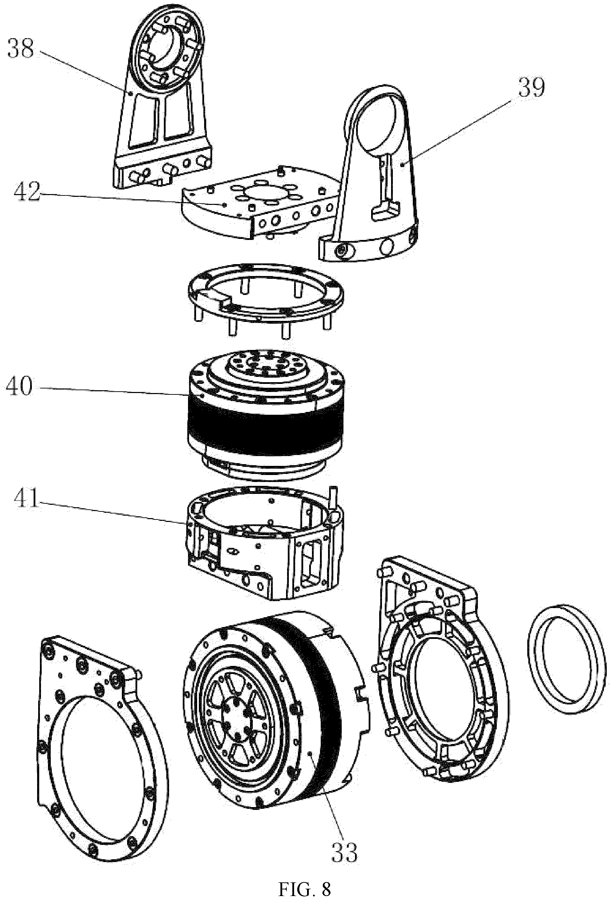

Referring to FIG. 6, FIG. 7, FIG. 8, FIG. 9, and FIG. 10, in this embodiment, the left leg mechanism 6 and the right leg mechanism 7 each include a cross-leg drive assembly 31, a thigh assembly 32, a knee joint drive motor 33, a shank assembly 34, an ankle assembly 35, and a foot plate assembly 36;
the hip mechanism 5 is connected to the cross-leg drive assembly 31 through a leg swing drive motor; an upper end of the thigh assembly 32 is connected to a power output end of the cross-leg drive assembly 31; a lower end of the thigh assembly 32 is connected to the knee joint drive motor 33, a power output end of the knee joint drive motor 33 is connected to an upper end of the shank assembly 34, a lower end of the shank assembly 34 is connected to the ankle assembly 35, and the ankle assembly 35 is connected to the foot plate assembly 36; the cross-leg drive assembly 31 includes a cross-leg drive motor 37, and the thigh assembly 32 includes a cross-swing output structural member 38, a cross-swing passive end structural member 39, a leg rotation drive motor 40, and a leg extension member 41; a power output end of the cross-leg drive motor 37 is connected to the cross-swing output structural member 38, and the other end of the cross-leg drive motor 37 is connected to the cross-swing passive end structural member 39; a leg rotation power output structural member 42 is arranged between the cross-swing output structural member 38 and the cross-swing passive end structural member 39, and a power output end of the leg rotation drive motor 40 is connected to the leg rotation power output structural member 42; and a lower end of the leg rotation drive motor 40 is connected to the leg extension member 41.

Specifically, the hip mechanism 5 drives the cross-leg drive assembly 31 to swing through the leg swing drive motor, and the cross-leg drive motor 37 of the cross-leg drive assembly 31 can drive the thigh assembly 32 and the shank assembly 34 to stride outwards. The cross-leg drive motor 37 is connected through the cross-swing output structural member 38 and the cross-swing passive end structural member 39, and performs power output through the cross-swing output structural member 38. The leg rotation drive motor 40 can drive the leg rotation power output structural member 42 between the cross-swing output structural member 38 and the cross-swing passive end structural member 39 to rotate, thereby driving the leg extension member 41, the knee joint drive motor 33, and the lower shank assembly 34 to rotate as a whole. The knee joint drive motor 33 can drive the shank assembly 34 to swing back and forth.

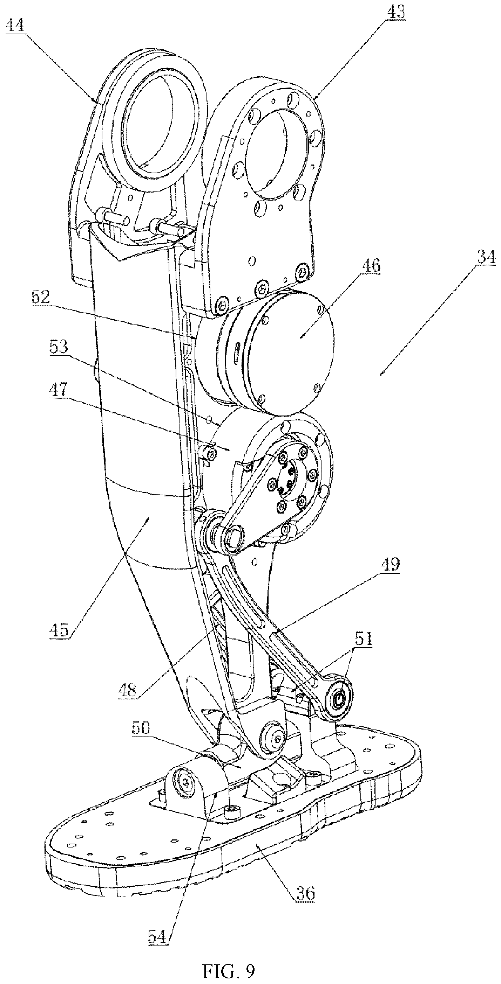

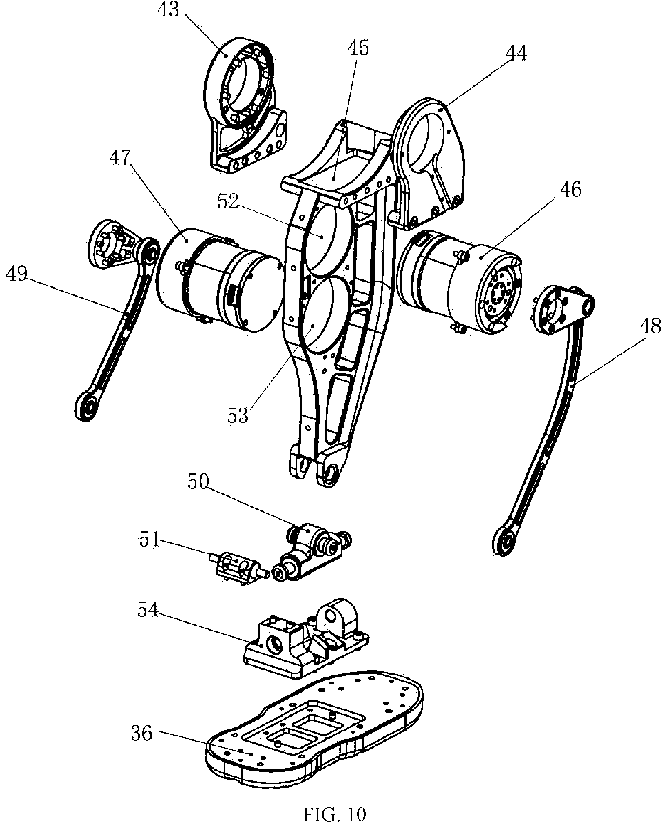

Referring to FIG. 9 and FIG. 10, in this embodiment, the shank assembly 34 includes a knee joint power output structural member 43, a knee joint passive end structural member 44, a shank structural member 45, a first ankle joint drive motor 46, a second ankle joint drive motor 47, a first rocker arm swing member 48, and a second rocker arm swing member 49; the ankle assembly 35 includes an ankle cross shaft member 50 and an ankle connecting rod 51; and
the power output end of the knee joint drive motor 33 is connected to the knee joint power output structural member 43, and the other end of the knee joint drive motor 33 is connected to the knee joint passive end structural member 44; an upper portion of the shank structural member 45 is connected between a lower portion of the knee joint power output structural member 43 and a lower portion of the knee joint passive end structural member 44, a lower portion of the shank structural member 45 is connected to the ankle cross shaft member 50, and the ankle cross shaft member 50 is fixed above the foot plate assembly 36; the first motor mounting position 52 and the second motor mounting position 53 are formed on the shank structural member 45; the first ankle joint drive motor 46 is fixed to the first motor mounting position 52, a power output end of the first ankle joint drive motor 46 is connected to an upper portion of the first rocker arm swing member 48, and a lower portion of the first rocker arm swing member 48 is connected to one side of the ankle connecting rod 51; the second ankle joint drive motor 47 is fixed to the second motor mounting position 53, a power output end of the second ankle joint drive motor 47 is connected to an upper portion of the second rocker arm swing member 49, and a lower portion of the second rocker arm swing member 49 is connected to the other side of the ankle connecting rod 51; and a lower end of the ankle connecting rod 51 is provided with a foot plate adapter 54, the ankle cross shaft member 50 is connected to the foot plate adapter 54, and the foot plate adapter 54 is fixed above the foot plate assembly 36.

Specifically, the knee joint drive motor 33 is connected through the knee joint passive end structural member 44 and the knee joint power output structural member 43, and the knee joint drive motor 33 drives the shank structural member 45 to swing back and forth through the knee joint power output structural member 43. The first ankle joint drive motor 46 drives an ankle assembly 35 to swing through the first rocker arm swing member 48, and the second ankle joint drive motor 47 drives the ankle assembly to swing through the second rocker arm swing member 49. The lower portions of the first rocker arm swing member 48 and the second rocker arm swing member 49 swing relative to the ankle connecting rod 51, and the shank structural member 45 swings relative to the ankle cross shaft member 50. When the first ankle joint drive motor 46 drives the first rocker arm swing member 48 and the second ankle joint drive motor 47 drives the second rocker arm swing member 49 in the same direction, the ankle cross shaft member 50 performs forward swing motion relative to the shank structural member 45. When the first ankle joint drive motor 46 drives the first rocker arm swing member 48 and the second ankle joint drive motor 47 drives the second rocker arm swing member 49 in the opposite direction, the ankle cross shaft member 50 performs side swing motion relative to the shank structural member 45. The ankle assembly 35 can drive the foot plate assembly 36 to perform corresponding forward swing and side swing motion.

In conclusion, in this disclosure, the head mechanism 1, the trunk mechanism 2, the left arm mechanism 3, the right arm mechanism 4, the hip mechanism 5, the left leg mechanism 6, and the right leg mechanism 7 are arranged; the main controller 9 and drive motors of the head mechanism 1, the trunk mechanism 2, the left arm mechanism 3, the right arm mechanism 4, the hip mechanism 5, the left leg mechanism 6, and the right leg mechanism 7 are powered through the battery pack 10, and actions of the head mechanism 1, the trunk mechanism 2, the left arm mechanism 3, the right arm mechanism 4, the hip mechanism 5, the left leg mechanism 6, and the right leg mechanism 7 are controlled through the main controller 9, so that the head mechanism 1 performs rotation and pitching motion relative to the trunk mechanism 2, the left arm mechanism 3 performs rotation motion relative to the trunk mechanism 2, the left arm mechanism 3 performs pitching motion relative to the trunk mechanism 2, and the upper arm of the left arm mechanism 3 rotates, and the elbow of the left arm mechanism 3 swings forwards; the right arm mechanism 4 performs rotation motion relative to the trunk mechanism 2, the right arm mechanism 4 performs pitching motion relative to the trunk mechanism 2, and the upper arm of the right arm mechanism 4 rotates, and the elbow of the right arm mechanism 4 swings forwards; the hip mechanism 5 performs rotation motion relative to the trunk mechanism 2; forward swing, side swing, rotation, knee forward swing, ankle forward swing, and ankle side swing motion of the left leg mechanism 6 are achieved; and forward swing, side swing, rotation, knee forward swing, ankle forward swing, and ankle side swing motion of the right leg mechanism 7 are achieved. The binocular camera 11 is mounted at a top end of the head mechanism 1. Rotation and pitching motion of the head binocular camera 11 can be achieved through the head rotation drive motor 13 and the head pitching drive motor 12. The head rotation drive motor 13 for controlling the rotation of the binocular camera 11 is fixed inside the trunk frame 8 of the trunk mechanism 2, an output flange of the head rotation drive motor 13 is connected to a fixed end of the head pitching drive motor 12 for controlling the pitching of the binocular camera 11, and an output flange of the head pitching drive motor 12 for controlling the pitching of the binocular camera 11 is connected to a camera mounting assembly, thereby realizing the movement of the binocular camera 11. The left arm rotation drive motor 14 in the trunk frame 8 can drive the left arm pitching drive motor 15, the left upper arm 16, the left elbow rotation drive motor 17, the left elbow swing drive motor 18, and the left forearm 19 to rotate. The left arm pitching drive motor 15 can drive the left upper arm 16, the left elbow rotation drive motor 17, the left elbow swing drive motor 18, and the left forearm 19 to pitch. The left elbow rotation drive motor 17 can drive the left elbow swing drive motor 18 and the left forearm 19 to rotate, and the left elbow swing drive motor 18 can drive the left forearm 19 to swing. The right arm rotation drive motor 20 in the trunk frame 8 can drive the right arm pitching drive motor 21, the right upper arm 22, the right elbow rotation drive motor 23, the right elbow swing drive motor 24, and the right forearm 25 to rotate. The right arm pitching drive motor 21 can drive the right upper arm 22, the right elbow rotation drive motor 23, the right elbow swing drive motor 24, and the right forearm 25 to pitch. The right elbow rotation drive motor 23 can drive the right elbow swing drive motor 24 and the right forearm 25 to rotate, and the right elbow swing drive motor 24 can drive the right forearm 25 to swing. The waist rotation drive motor 26 can drive the hip structural member 27 to rotate through the hip flange 28. The left leg swing drive motor 29 in the hip structural member 27 can drive the entire left leg mechanism 6 to swing, and the right leg swing drive motor 30 in the hip structural member 27 can drive the entire right leg mechanism 7 to swing. For the left leg swing drive motor 29 and the right leg swing drive motor 30, a clamping structural member can be connected to the hip structural member 27, and the clamping structural member fixes the left leg swing drive motor 29 and the right leg swing drive motor 30 in the hip structural member 27 through a bolt. The hip mechanism 5 drives the cross-leg drive assembly 31 to swing through the leg swing drive motor, and the cross-leg drive motor 37 of the cross-leg drive assembly 31 can drive the thigh assembly 32 and the shank assembly 34 to stride outwards. The cross-leg drive motor 37 is fixed by the cross-swing output structural member 38 and the cross-swing passive end structural member 39, and performs power output through the cross-swing output structural member 38. The leg rotation drive motor 40 can drive the leg rotation power output structural member 42 between the cross-swing output structural member 38 and the cross-swing passive end structural member 39 to rotate, thereby driving the leg extension member 41, the knee joint drive motor 33, and the lower shank assembly 34 to rotate as a whole. The knee joint drive motor 33 can drive the shank assembly 34 to swing back and forth. The knee joint drive motor 33 is fixed by the knee joint passive end structural member 44 and the knee joint power output structural member 43, and the knee joint drive motor 33 drives the shank structural member 45 to swing back and forth through the knee joint power output structural member 43. The first ankle joint drive motor 46 drives an ankle assembly 35 to swing through the first rocker arm swing member 48, and the second ankle joint drive motor 47 drives the ankle assembly to swing through the second rocker arm swing member 49. The lower portions of the first rocker arm swing member 48 and the second rocker arm swing member 49 swing relative to the ankle connecting rod 51, and the shank structural member 45 swings relative to the ankle cross shaft member 50. When the first ankle joint drive motor 46 drives the first rocker arm swing member 48 and the second ankle joint drive motor 47 drives the second rocker arm swing member 49 in the same direction, the ankle cross shaft member 50 performs forward swing motion relative to the shank structural member 45. When the first ankle joint drive motor 46 drives the first rocker arm swing member 48 and the second ankle joint drive motor 47 drives the second rocker arm swing member 49 in the opposite direction, the ankle cross shaft member 50 performs side swing motion relative to the shank structural member 45. The ankle assembly 35 can drive the foot plate assembly 36 to perform corresponding forward swing and side swing motion. According to this disclosure, the structure is high in overall layout compactness and high in joint integration degree, so that a large movement range of a robot can be achieved, and flexibility and universality are improved.

Although this disclosure has been described in detail with general descriptions and embodiments above, it is obvious to those skilled in the art that some modifications or improvements can be made based on this disclosure. Therefore, these modifications or improvements made without departing from the spirit of this disclosure all fall within the scope of protection claimed by this disclosure.

## Claims

1. A high-flexibility simulation robot, comprising a head mechanism (1), a trunk mechanism (2), a left arm mechanism (3), a right arm mechanism (4), a hip mechanism (5), a left leg mechanism (6), and a right leg mechanism (7);
the head mechanism (1) is connected to an upper end of the trunk mechanism (2), and the head mechanism (1) has two degrees of freedom of motion: the head mechanism (1) performs rotation and pitching motion relative to the trunk mechanism (2);
the left arm mechanism (3) is connected to a left side of the trunk mechanism (2), and the left arm mechanism (3) has four degrees of freedom of motion: the left arm mechanism (3) performs rotation motion relative to the trunk mechanism (2), the left arm mechanism (3) performs pitching motion relative to the trunk mechanism (2), an upper arm of the left arm mechanism (3) rotates, and an elbow of the left arm mechanism (3) swings forwards;
the right arm mechanism (4) is connected to a right side of the trunk mechanism (2), and the right arm mechanism (4) has four degrees of freedom of motion: the right arm mechanism (4) performs rotation motion relative to the trunk mechanism (2), the right arm mechanism (4) performs pitching motion relative to the trunk mechanism (2), an upper arm of the right arm mechanism (4) rotates, and an elbow of the right arm mechanism (4) swings forwards;
the hip mechanism (5) is connected to a lower end of the trunk mechanism (2), and the hip mechanism (5) has one degree of freedom of motion: the hip mechanism (5) performs rotation motion relative to the trunk mechanism (2);
the left leg mechanism (6) is connected to a left side of the hip mechanism (5), and the left leg mechanism (6) has six degrees of freedom of motion: forward swing, side swing, rotation, knee forward swing, ankle forward swing, and ankle side swing motion of the left leg mechanism (6); and
the right leg mechanism (7) is connected to a right side of the hip mechanism (5), and the right leg mechanism (7) has six degrees of freedom of motion: forward swing, side swing, rotation, knee forward swing, ankle forward swing, and ankle side swing motion of the right leg mechanism (7).

2. The high-flexibility simulation robot according to claim 1, wherein the trunk mechanism (2) comprises a trunk frame (8), and a main controller (9) and a battery pack (10) are arranged in the trunk frame (8); and drive motors of the head mechanism (1), the trunk mechanism (2), the left arm mechanism (3), the right arm mechanism (4), the hip mechanism (5), the left leg mechanism (6), and the right leg mechanism (7) are all electrically connected to the main controller (9), and the battery pack (10) is electrically connected to the main controller (9).

3. The high-flexibility simulation robot according to claim 2, wherein the head mechanism (1) comprises a binocular camera (11), and a head pitching drive motor (12) is connected to a lower end of the binocular camera (11); and a head rotation drive motor (13) is connected to a lower end of the head pitching drive motor (12), and the head rotation drive motor (13) is arranged inside the trunk frame (8) of the trunk mechanism (2).

4. The high-flexibility simulation robot according to claim 2, wherein the left arm mechanism (3) comprises a left arm rotation drive motor (14), a left arm pitching drive motor (15), a left upper arm (16), a left elbow rotation drive motor (17), a left elbow swing drive motor (18), and a left forearm (19);
the left arm rotation drive motor (14) is located inside the trunk frame (8), and a power output end of the left arm rotation drive motor (14) is connected to the left arm pitching drive motor (15); a power output end of the left arm pitching drive motor (15) is connected to one end of the left upper arm (16); the left elbow rotation drive motor (17) is located inside the left upper arm (16), and a power output end of the left elbow rotation drive motor (17) is connected to the left elbow swing drive motor (18); and a power output end of the left elbow swing drive motor (18) is connected to the other end of the left upper arm (16), and the left forearm (19) is connected to a side portion of the left elbow swing drive motor (18).

5. The high-flexibility simulation robot according to claim 2, wherein the right arm mechanism (4) comprises a right arm rotation drive motor (20), a right arm pitching drive motor (21), a right upper arm (22), a right elbow rotation drive motor (23), a right elbow swing drive motor (24), and a right forearm (25);
the right arm rotation drive motor (20) is located inside the trunk frame (8), and a power output end of the right arm rotation drive motor (20) is connected to the right arm pitching drive motor (21); a power output end of the right arm pitching drive motor (21) is connected to one end of the right upper arm (22); the right elbow rotation drive motor (23) is located inside the right upper arm (22), and a power output end of the right elbow rotation drive motor (23) is connected to the right elbow swing drive motor (24); and a power output end of the right elbow swing drive motor (24) is connected to the other end of the right upper arm (22), and the right forearm (25) is connected to a side portion of the right elbow swing drive motor (24).

6. The high-flexibility simulation robot according to claim 2, wherein the hip mechanism (5) comprises a waist rotation drive motor (26), a hip structural member (27), a hip flange (28), a left leg swing drive motor (29), and a right leg swing drive motor (30);
an upper portion of the waist rotation drive motor (26) is fixedly connected to a lower end of the trunk frame (8), and a power output end of the waist rotation drive motor (26) is connected to the hip structural member (27) through the hip flange (28);
the left leg swing drive motor (29) is arranged on a left side of the interior of the hip structural member (27), and the hip mechanism (5) is connected to the left leg mechanism (6) through the left leg swing drive motor (29); and
the right leg swing drive motor (30) is arranged on a right side of the interior of the hip structural member (27), and the hip mechanism (5) is connected to the right leg mechanism (7) through the right leg swing drive motor (30).

7. The high-flexibility simulation robot according to claim 6, wherein the left leg mechanism (6) and the right leg mechanism (7) each comprise a cross-leg drive assembly (31), a thigh assembly (32), a knee joint drive motor (33), a shank assembly (34), an ankle assembly (35), and a foot plate assembly (36);
the hip mechanism (5) is connected to the cross-leg drive assembly (31) through a leg swing drive motor; an upper end of the thigh assembly (32) is connected to a power output end of the cross-leg drive assembly (31); and a lower end of the thigh assembly (32) is connected to the knee joint drive motor (33), a power output end of the knee joint drive motor (33) is connected to an upper end of the shank assembly (34), a lower end of the shank assembly (34) is connected to the ankle assembly (35), and the ankle assembly (35) is connected to the foot plate assembly (36).

8. The high-flexibility simulation robot according to claim 7, wherein the cross-leg drive assembly (31) comprises a cross-leg drive motor (37), and the thigh assembly (32) comprises a cross-swing output structural member (38), a cross-swing passive end structural member (39), a leg rotation drive motor (40), and a leg extension member (41); a power output end of the cross-leg drive motor (37) is connected to the cross-swing output structural member (38), and the other end of the cross-leg drive motor (37) is connected to the cross-swing passive end structural member (39);
a leg rotation power output structural member (42) is arranged between the cross-swing output structural member (38) and the cross-swing passive end structural member (39), and a power output end of the leg rotation drive motor (40) is connected to the leg rotation power output structural member (42); and a lower end of the leg rotation drive motor (40) is connected to the leg extension member (41).

9. The high-flexibility simulation robot according to claim 8, wherein the shank assembly (34) comprises a knee joint power output structural member (43), a knee joint passive end structural member (44), a shank structural member (45), a first ankle joint drive motor (46), a second ankle joint drive motor (47), a first rocker arm swing member (48), and a second rocker arm swing member (49); the ankle assembly (35) comprises an ankle cross shaft member (50) and an ankle connecting rod (51);
the power output end of the knee joint drive motor (33) is connected to the knee joint power output structural member (43), and the other end of the knee joint drive motor (33) is connected to the knee joint passive end structural member (44); an upper portion of the shank structural member (45) is connected between a lower portion of the knee joint power output structural member (43) and a lower portion of the knee joint passive end structural member (44), a lower portion of the shank structural member (45) is connected to the ankle cross shaft member (50), and the ankle cross shaft member (50) is fixed above the foot plate assembly (36);
a first motor mounting position (52) and a second motor mounting position (53) are formed on the shank structural member (45); the first ankle joint drive motor (46) is fixed to the first motor mounting position (52), a power output end of the first ankle joint drive motor (46) is connected to an upper portion of the first rocker arm swing member (48), and a lower portion of the first rocker arm swing member (48) is connected to one side of the ankle connecting rod (51); and the second ankle joint drive motor (47) is fixed to the second motor mounting position (53), a power output end of the second ankle joint drive motor (47) is connected to an upper portion of the second rocker arm swing member (49), and a lower portion of the second rocker arm swing member (49) is connected to the other side of the ankle connecting rod (51).

10. The high-flexibility simulation robot according to claim 9, wherein a lower end of the ankle connecting rod (51) is provided with a foot plate adapter (54), the ankle cross shaft member (50) is connected to the foot plate adapter (54), and the foot plate adapter (54) is fixed above the foot plate assembly (36).
